(19) **Europäisches Patentamt**

**European Patent Office**

**Office européen des brevets**

(11) **EP 1 110 081 B1**

(12) **EUROPEAN PATENT SPECIFICATION**

(45) Date of publication and mention
of the grant of the patent:
**26.03.2003 Bulletin 2003/13**

(51) Int Cl.$^7$: **G01N 33/00**, G01N 27/12

(21) Application number: **99940379.3**

(86) International application number:
**PCT/GB99/02757**

(22) Date of filing: **19.08.1999**

(87) International publication number:
**WO 00/014531 (16.03.2000 Gazette 2000/11)**

(54) **Method of sensing ozone concentration in a gas mixture using a semiconductor-based gas sensor**

Verfahren zur Bestimmung der Ozonkonzentration in einer Gasmischung mittels einem Halbleitergassensor

Methode de detection d'ozone dans une melange de gaz utilisant un capteur de gaz à base de semi-conducteur

(84) Designated Contracting States:
**DE DK ES FR GB IT**

(30) Priority: **03.09.1998 GB 9819228**

(43) Date of publication of application:
**27.06.2001 Bulletin 2001/26**

(73) Proprietor: **City Technology Limited
Portsmouth Hants PO6 1SZ (GB)**

(72) Inventors:
• **WILLIAMS, David, Edward
Abingdon OX14 2EE (GB)**
• **PRATT, Keith, Francis, Edwin
Didcot OX11 8UT (GB)**
• **JONES, Roderic Lewis
Girton, Cambridge CB3 0LU (GB)**
• **COX, Richard Anthony
Barton, Cambridge CB3 7AL (GB)**

• **McGeehin, Peter
Newbury, Berks. RG20 &QU (GB)**

(74) Representative:
**Skone James, Robert Edmund et al
GILL JENNINGS & EVERY
Broadgate House
7 Eldon Street
London EC2M 7LH (GB)**

(56) References cited:
EP-A- 0 775 912           WO-A-95/35495
DE-C- 4 316 970           US-A- 4 627 269

• **HEILIG A ET AL: "Gas identification by modulating temperatures of SnO2-based thick film sensors" SENSORS AND ACTUATORS B,CH,ELSEVIER SEQUOIA S.A., LAUSANNE, vol. 43, no. 1-3, page 45-51 XP004103418 ISSN: 0925-4005**

## Description

This invention relates to the semiconductor gas sensing of ozone.

In the following description, parts per billion (ppb) quoted hereinafter are by volume.

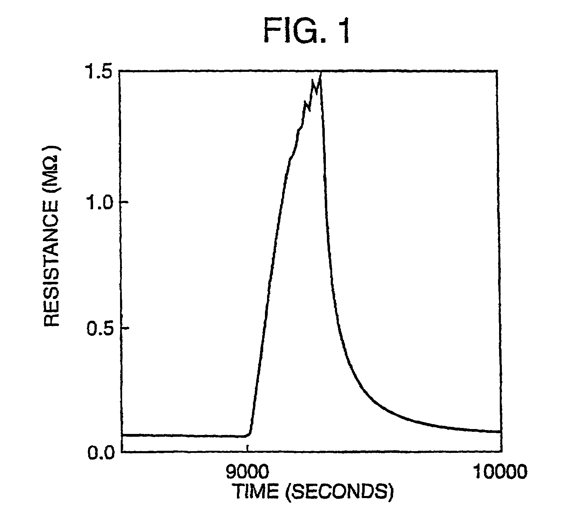

In our previous application WO-95/35495, we described a method of measurement of ozone concentration involving the measurement of electrical resistance of a porous tungstic oxide element, held at elevated temperature (200-500°C). When the element is held at constant temperature, the sensitivity to ozone tends to vary with time and to be dependent upon the history of the device, including previous exposure to ozone. Other semiconducting oxides have been shown to exhibit resistance increases at elevated temperature in the presence of small concentrations of ozone in the air: $In_2O_3$, pure and variously doped, by Takada et al, Sensors & Actuators B : Chemical 13 (1993) 404; $MoO_3$ by Garlo et al., Sensors & Actuators B: Chemical 47 (1998) 92. We have now discovered that $SnO_2$ also shows the effect (see Figure 1), though at rather lower temperature ($\sim$200°C) and with problems of baseline stability. We believe that the phenomenon is generic to a certain general class of semiconducting oxides for which oxygen vacancies can be created at the surface, at the operating temperature, in air, in sufficient concentration to substantially affect the concentration of electronic charge carriers and hence the electrical conductivity.

A. Heilig et al. (1997) Sensors & Actuators B 43, 45-51, discloses a method for the quantitative analysis of a mixture of CO and $NO_2$ in air by sinusoidal modulation of the operating temperature of the $SnO_2$-based thick film gas sensors.

JP-A-3-150454 describes an ozone detector utilizing a $SnO_2$ film. The film is heated to a temperature in the range 350-400°C and then cooled to a temperature in the range 150-200°C, ozone being detected from the output of the sensor when in its lower temperature range. The inventors found that they could not utilize high temperature regions above 400°C because the semiconductor became sensitive to miscellaneous gases such as ethanol. They must therefore achieve resetting of the gas sensor at a temperature less than 400°C.

JP-A-4-145354 describes the use of a doped $WO_3$ sensor for sensing automobile exhaust gases.

The invention is defined by the claims hereinafter.

We have discovered a method for analysis of ozone concentration in air.

The method surprisingly results in (1) a significant increase in the stability of the signals generated by sensors incorporating these materials, and (2) significantly reduces the lower detection limit of the sensors for ozone to concentrations of a few ppb, which is typical of the UV ozone analysers conventionally employed to detect this molecule. The method involves causing a perturbation of the temperature of the sensor and analysing the resulting time variation of the sensor resistance or conductance.

The method gives substantially increased accuracy and stability, and consequently a greater reliability of measurement, especially at very low ozone concentration (less than 100 ppb in air). A very low detection limit for ozone can be achieved, which can be reliably sustained in measurement over a long period of time. A typical detection limit achieved using a device based on $WO_3$ is 2.5 ppb in air, reliably sustained without change of calibration over at least 3 months.

Preferred features of the invention will now be described, by way of example, with reference to the accompanying drawings, in which:

Figure 1 is a graph showing the response of an $SnO_2$ sensor operated at 175°C to a pulse of 50 ppb ozone in air,

Figure 2 is a graph showing the response of a $WO_3$ sensor to 50 ppb ozone in air after having been stepped to 600°C from an operating temperature of 400°C,

Figures 3 and 4 show the variations in time constants of equation (1) hereinafter with ozone concentration,

Figure 5 shows the variation in resistance of the $WO_3$ sensor to ozone concentration and the result of curve fitting applied thereto,

Figure 6 shows the response of the $WO_3$ sensor to ozone concentration over a period of days,

Figure 7 is a graph illustrating the time required to reset the sensor surface as a function of reset temperature,

Figure 8 is a graph illustrating the energy consumed in resetting the sensor surface, as a function of reset temperature,

Figure 9 compares the results of employing a $WO_3$ sensor according to the invention to monitor street level ozone concentration as compared to similar results obtained with a conventional W absorption instrument, and

Figure 10 compares the results of employing a $WO_3$ sensor according to the invention to provide a vertical profile of ozone in the atmosphere as compared to similar results obtained with a conventional instrument.

The invention broadly involves perturbing the sensor as follows:

- step to a high temperature to reset the surface
- step back to a low temperature to make the measurement
- analyse the variation of resistance with time at the low temperature to obtain the ozone concentration
- repeat the sequence.

With the device based on $WO_3$, the "high" tem-

perature is 400°C - 800°C and the "low" temperature is 200°C - 500°C, with the obvious constraint that the "high" temperature should be greater than the "low" temperature.

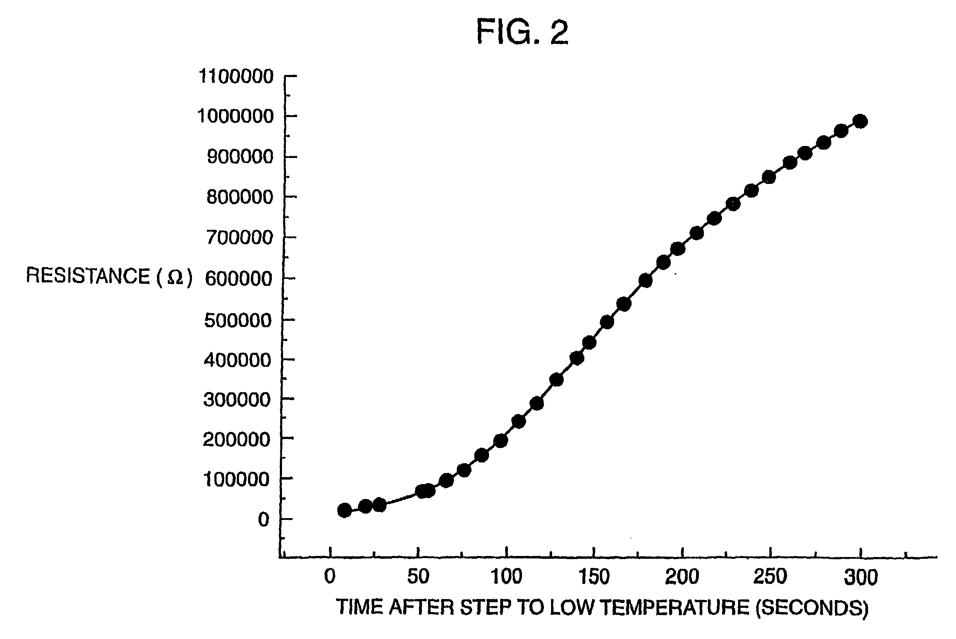

Figure 2 shows an example of this. In the presence of ozone in the air, the device temperature was stepped to 600°C for 300s, then stepped back to 400°C for 300s. The time-variation of resistance at 400°C following the step back (t=o) is shown. The conductivity, S (reciprocal of resistance) at the low temperature shows the following variation:

$$S(t) = S_{lim} + a, e^{-t/\tau_1} + a_2 e^{-t/\tau_2} \qquad (1)$$

where

$$S_{lim} = S_{\infty} + b_o/(O_3)$$

$$\tau_1 = b_1/(O_3)$$

$$\tau_2 = b_2/(O_3)$$

where $(O_3)$ denotes the ozone concentration.

Here, $S_{\infty}$, $a_j$ are constants which depend on the time and temperature of the "high" temperature step. The $b_j$ depend upon the temperature of the "low" temperature step, at which the measurement is made but do not depend on the high temperature step values. Typically, $b_2 \approx 10b$, so that the second time-dependent term is only significant at higher ozone concentration. If the measurement temperature (the "low" temperature) is decreased then the ratio $b_2/b_1$ increases, so again the second time-dependent term becomes less significant

Application of method to ozone measurement

(a) by curve-fitting the data to equation (1), the values of $\tau_1$, $\tau_2$ are determined. By reference to a calibration curve of $\tau_1$ (and if necessary $\tau_2$) against ozone concentration, the ozone concentration is obtained. The sensor and the stability of the operating circuitry are checked by checking the stability of the parameters $S_\infty$, $a_1$, $a_2$, which are also obtained from the fit. If the measurement time is limited, or the ozone concentration is low enough, or the measurement temperature is low enough, then only one time constant will be required to describe the data, and the reliability of the parameter fit can be improved.

In the example shown in Figure 2, the fitted curve provided the values $\tau_1$ = 30s (seconds) and

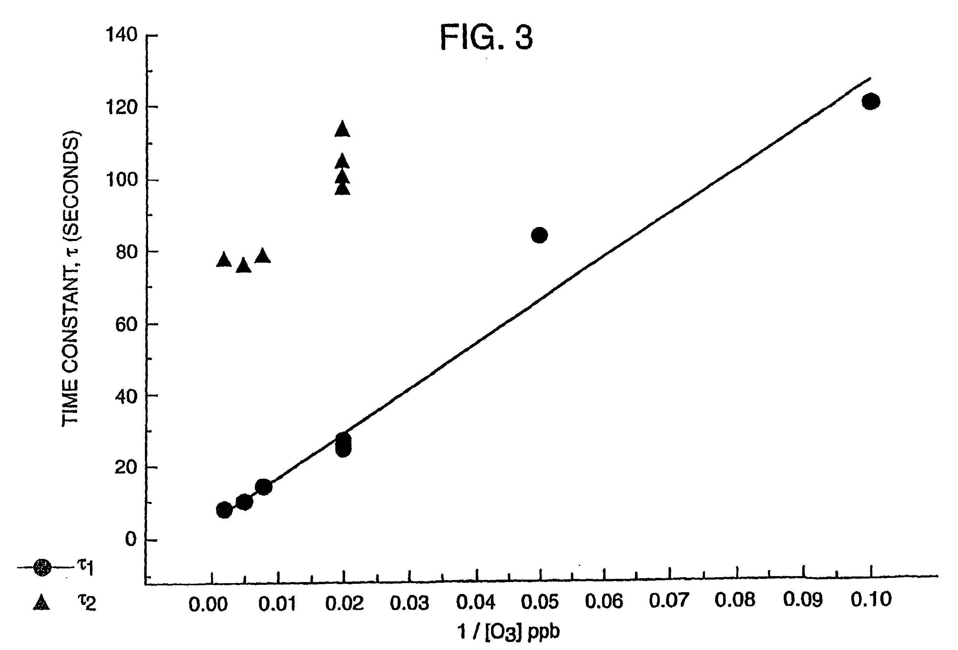

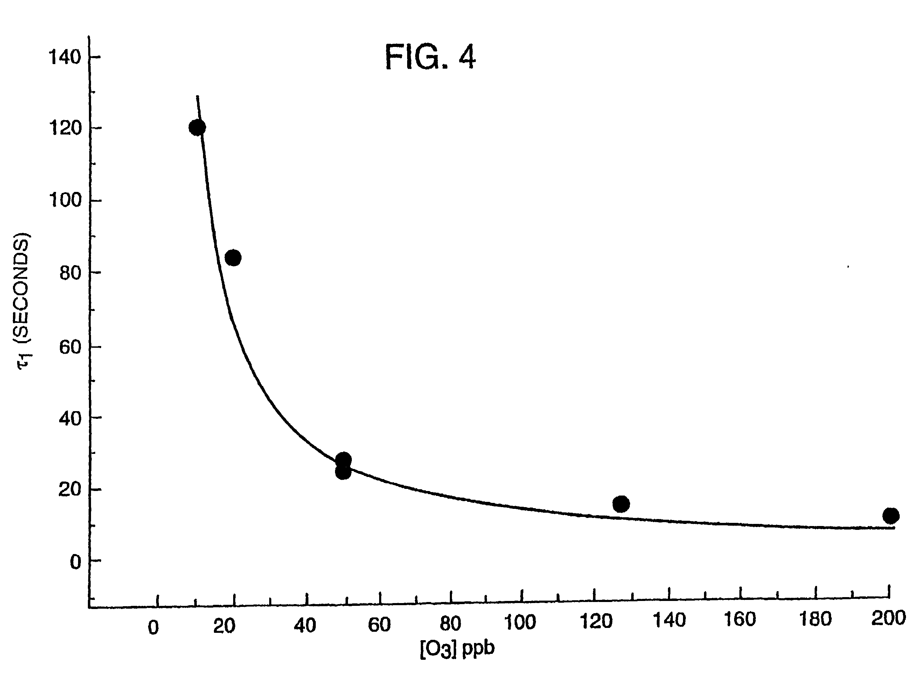

$\tau_2$ - 130s. Examples of the variation of time constants with ozone concentration are shown in Figures 3 and 4. In Figure 4, the fitted line corresponded to

$$\tau/s = (1300 \pm 70)/(O_3 ppb)$$

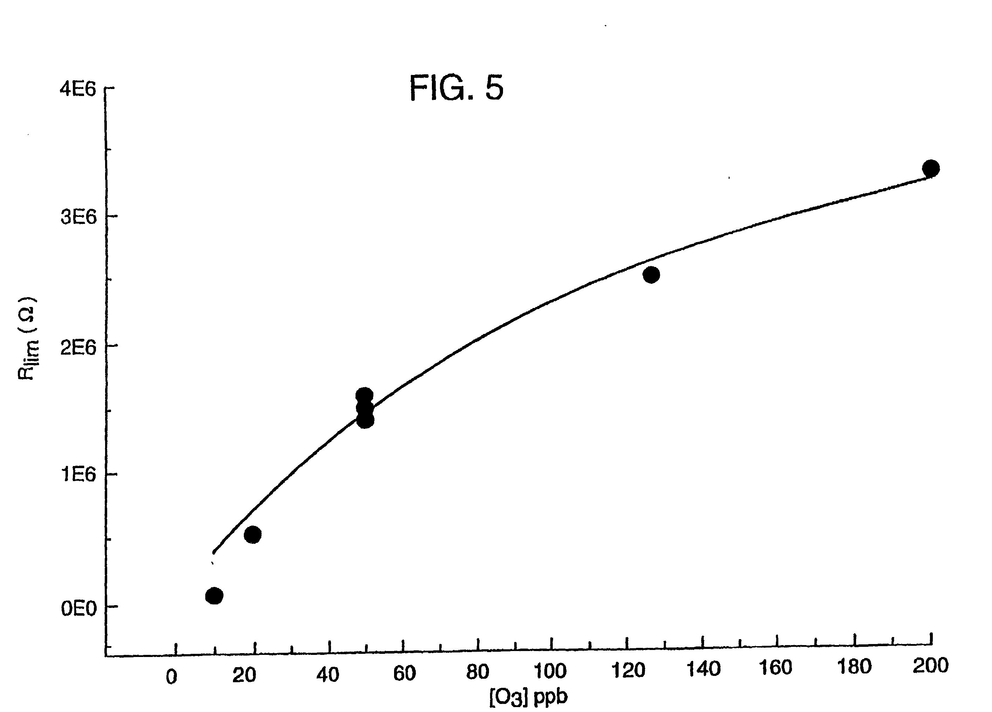

Figure 5 shows the variation of sensor resistance to ozone concentration and fitting the equation

$$1/R = a + b/O_3$$

to the results. In the example shown

$$a = 1.81.10^{-7} \, \Omega^{-1}$$

$$b = 2.44.10^{-5} \, \Omega^{-1}.ppb$$

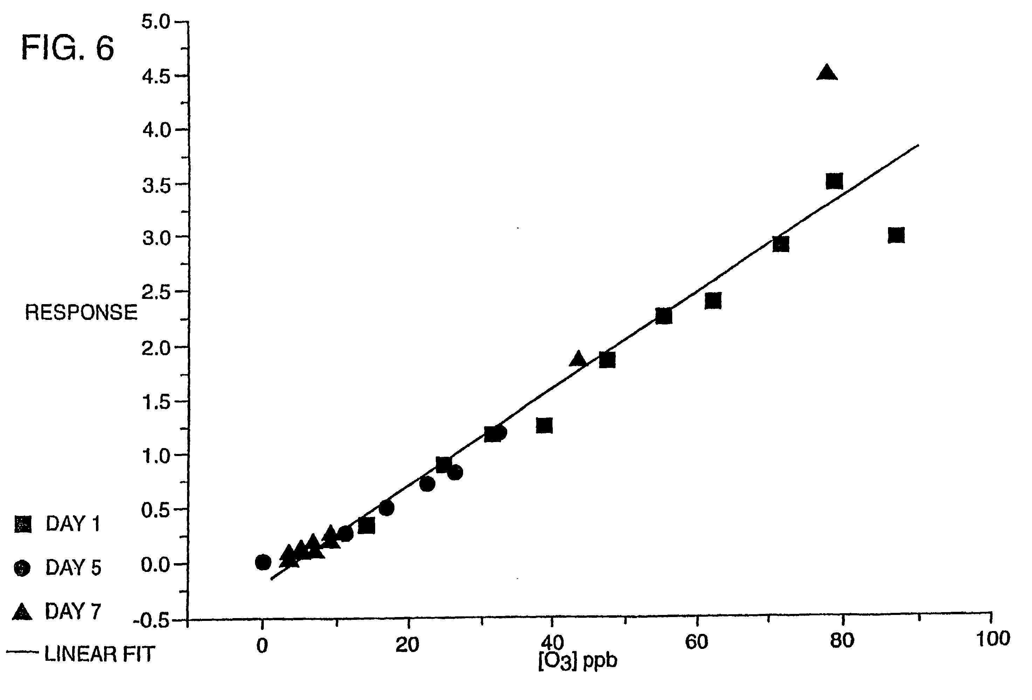

(b) the resistance or conductance at a particular time after the change of temperature can be determined, and the ozone concentration can be obtained from a calibration curve of this resistance against ozone concentration. Manipulation of equation (1) shows that a linear calibration of either conductance or resistance will be obtained if the time constants $\tau_1$, $\tau_2$ are sufficiently long: i.e. at low $[O_3]$. Figure 6 shows an example. In this example, between the calibration runs, the sensor had been used continuously, measuring ozone in urban air. The calibration did not drift over a period of some months. From the calibration line, a detection limit of 2.5 ppb is deduced.

In Figure 6, the ordinate "Response" is Rg/Ro-1, where Rg is the resistance of the sensor in the presence of ozone and Ro is the resistance in the presence of air. The response values were taken at 128s, with all data having a relative humidity of 49%. The data can be fitted to a straight line

$$Response = A + B.[O_3]$$

In the example shown in Figure 6

A = - 0.192 with a standard deviation of 0.083
B = 0-.045 with a standard deviation of 0.002.

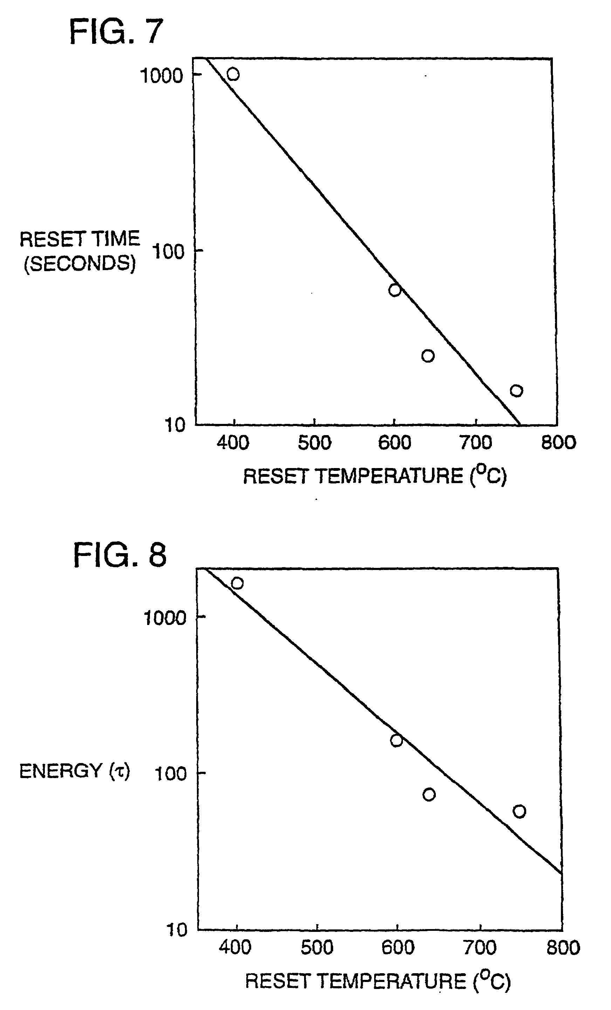

Unlike (a), this method requires the parameters $S_\infty$, $a_1$, $a_2$ to remain stable that is, that the surface should be fully "reset". We have found that this can be achieved by an appropriate choice of temperature and time for the "high" temperature step. For Figure 6, it was 600°C and 300s, with measurement at 400°C. Figure 7 shows the required time (for reset) as a function of the temperature, for WO$_3$-based devices. The higher the temperature, the shorter the time. Figure 8 shows the energy consumption during the high temperature step (power required x time required). The energy consumption decreases with increasing reset temperature. So, the higher the reset temperature the better, both for time resolution (the device is not measuring during the reset period) and for energy consumption (the less energy consumed the better for applications requiring battery power, e.g. balloon-borne instruments).

(c) the time, t* required to achieve a particular resistance, R*, can be measured and the ozone concentration derived from a calibration derived from a calibration curve. From equation (1), t* varies approximately as $1/(O_3)$. The value, R*, is chosen according to the expected ozone concentration: obviously, choosing a lower value will decrease t* for a given $(O_3)$. This method has the advantage of measurement simplicity: a counter is started at the end of the reset pulse and stopped when a comparator circuit senses that the measuring current through the sensor falls below a preset level.

(d) is a combination of (b) and (c). The resistance is monitored as a function of time until the end of a preset measurement time, $t_m$. A resistance trigger level, R*, is also set. If, during $t_m$, the resistance exceeds R*, then the time of this occurrence, t*, determines the ozone concentration, the sensor is reset and the sequence repeats. If, at the end of $t_m$, $R_m/R*$, then the value of resistance $R_m$ at $t_m$ is used to determine the ozone concentration, the sensor is reset and the sequence repeats. This method gives a wide dynamic range and good response time with simple electronics.

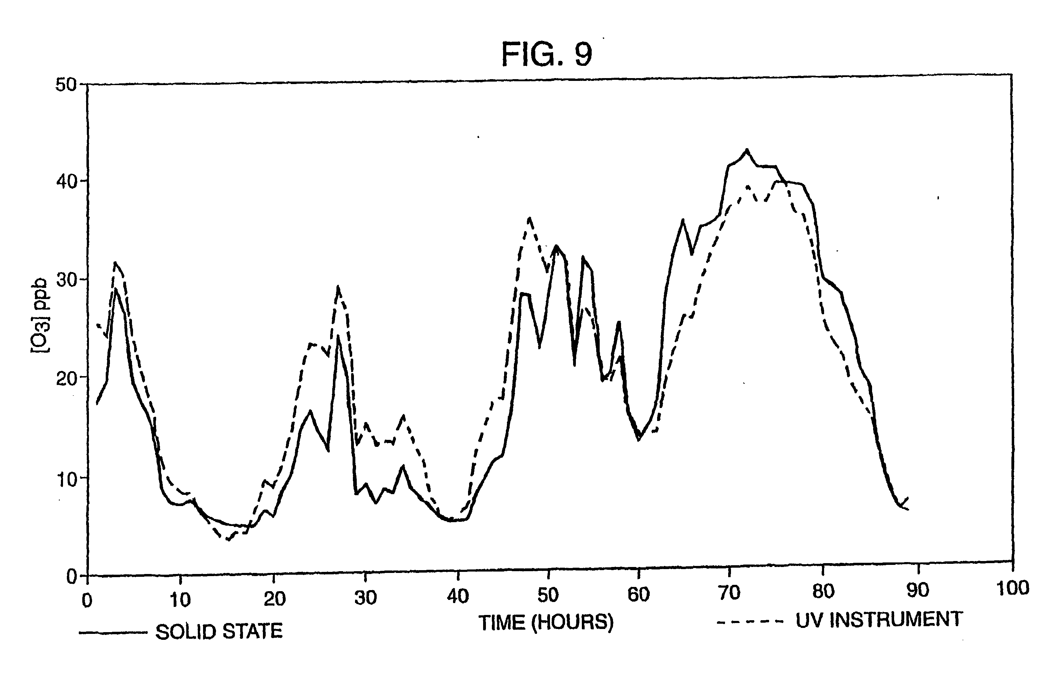

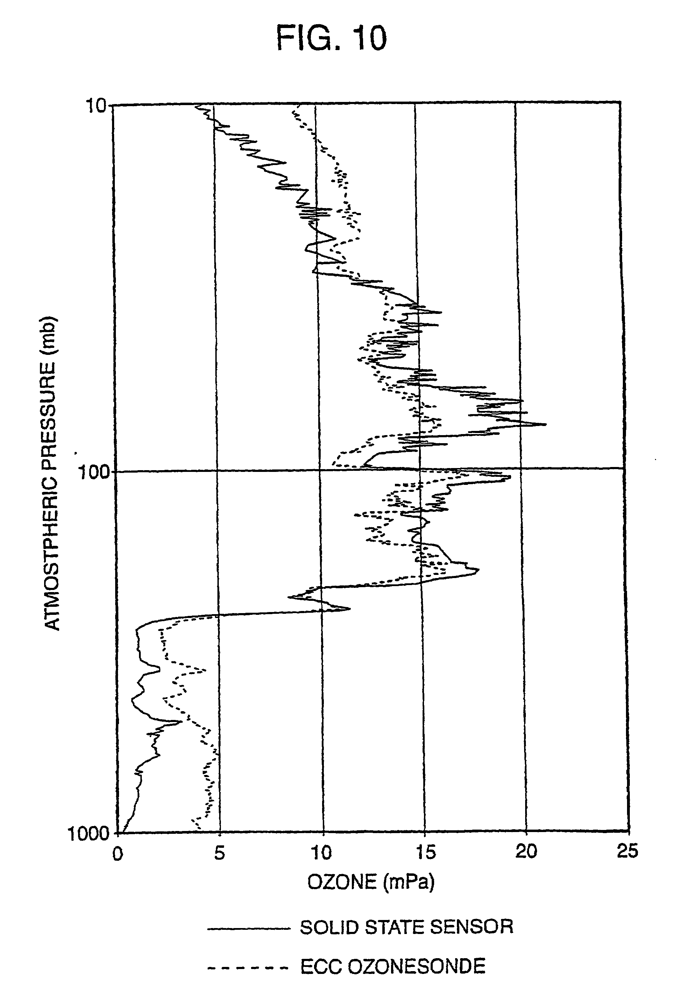

The validity of the results of the two step temperature technique are shown in Figures 9 and 10. In Figure 9 the variation in street level ozone concentration over a period of four days was measured with a WO$_3$ sensor as well as with a conventional UV absorption instrument The two types of measurements agree generally quite well.

Figure 10 shows the results of vertical profiling for ozone in the atmosphere using a WO$_3$ sensor given a single high temperature reset pulse, and the equivalent results from a conventional ECC ozone sonde. Again, the results agree generally well.

## Claims

1. A method of sensing the concentration of O$_3$ in a gas mixture using a semiconductor gas sensor having a resistivity sensitive to O$_3$, which comprises increasing the sensor operating temperature to a first temperature to allow the sensor surface to reset then decreasing the sensor operating temperature to a second temperature and analysing the resultant resistance of the sensor at the second temperature, **characterized in that** the sensor is a layer of WO$_3$; and **in that** the first temperature is 400 to 800°C and the second temperature is 200 to 500°C.

2. A method according to claim 1 wherein the sensor resistance is analyzed as a function of time.

## Patentansprüche

1. Verfahren zum Messen der Konzentration von O$_3$ in einem Gasgemisch mittels eines Halbleiter-Gassensors, der einen O$_3$-empfindlichen spezifischen Widerstand hat, bei dem die Betriebstemperatur des Sensors auf eine erste Temperatur erhöht wird, um der Sensoroberfläche ein Rücksetzen zu ermöglichen, und dann die Betriebstemperatur des Sensors auf eine zweite Temperatur gesenkt und der resultierende Widerstand des Sensors bei der zweiten Temperatur analysiert wird, **dadurch gekennzeichnet, daß** der Sensor eine Schicht aus WO$_3$ ist und daß die erste Temperatur 400 bis 800°C und die zweite Temperatur 200 bis 500°C beträgt.

2. Verfahren nach Anspruch 1, bei dem der Sensorwiderstand in Abhängigkeit von der Zeit analysiert wird.

## Revendications

1. Procédé de détection de la concentration de O$_3$ dans un mélange de gaz à l'aide d'un capteur de gaz à semiconducteur ayant une sensibilité à O$_3$, qui comprend l'augmentation de la température du capteur à une première température afin que la surface du capteur soit rétablie, puis la réduction de la température du capteur à une seconde température, et l'analyse de la résistance résultante du capteur à la seconde température, **caractérisé en ce que** la première température est comprise entre 400 et 800 °C, et la seconde température est comprise entre 200 et 500 °C.

2. Procédé selon la revendication 1, dans lequel la résistance du capteur est analysée en fonction du temps.

# FIG. 1

# FIG. 2

TIME AFTER STEP TO LOW TEMPERATURE (SECONDS)

EP 1 110 081 B1

FIG. 3

FIG. 4

FIG. 5

FIG. 6

RESPONSE

■ DAY 1
● DAY 5
▲ DAY 7
— LINEAR FIT

[O₃] ppb

EP 1 110 081 B1

## FIG. 7

## FIG. 8

FIG. 9

# FIG. 10

ATMOSTPHERIC PRESSURE (mb)

OZONE (mPa)

——————— SOLID STATE SENSOR

- - - - - - ECC OZONESONDE